# EUROPEAN PATENT SPECIFICATION

(11) **EP 1 080 643 B1**
(45) Date of publication and mention of the grant of the patent: **19.11.2003**
(21) Application number: 00202576.5
(22) Date of filing: 18.07.2000
(51) Int. Cl.: A23D 9/007, A21D 13/00

(54) **Blends for barrier layers for food products**
Mischungen für Barriereschichten für Nahrungsmittel
Mélanges pour les couches barrières de produits alimentaires

(30) Priority: 31.08.1999 EP 99306928
(43) Date of publication of application: 07.03.2001
(73) Proprietor: LODERS CROKLAAN B.V., 1521 AZ Wormerveer (NL); UNILEVER N.V., 3013 AL Rotterdam (NL)
(72) Inventor: Cain, Frederick William, 1521 AZ Wormerveer (NL); Dekker, Willem, 1521 AZ Wormerveer (NL); Talbot, Geoffrey, Purfleet, Essex, RM19 1SD (GB); Smith, Kevin Warren, Sharnbrook, Bedford, MK44 1LQ (GB)
(74) Representative: Stevens, Ian Edward

(56) References cited:
- WO-A-98/42214
- WO-A-98/45390
- US-A- 4 272 447
- US-A- 5 130 151
- US-A- 5 660 865
- CHEMICAL ABSTRACTS, vol. 80, no. 17, 1974 Columbus, Ohio, US; abstract no. 35972x, POBORAN ET AL.: "Superior evaluation of waxes resulting form sunflower oil winterization." page 209; column 1; XP002128753 & INDUSTRIA ALIMENTARA, vol. 24, no. 7, 1973, pages 349-350, Bucharest

## Description

Food products that comprise more than one product layer are well known in the art. It is also known that, if the food product comprises layers, wherein at least one of the layers contains water so that the layers have a different water activity (Aw), these products often suffer from migration of the water from one layer to the other layer. Very often this migration has a negative impact on the performance of the food product, e.g. the product might suffer from sogginess, resulting in a product with insufficient appearance or texture. Therefore in these products a water barrier layer is very often used in order to decrease and if possible to avoid the water migration. A good water barrier layer should thereby fulfil the following criteria:
- it should have a low water permeability.
- it should stick well to the surfaces of the layers that it is supposed to protect against the water migration.
- it should not be too brittle, so that the formation of cracks in this layer is avoided as much as possible.
- it should have an appropriate viscosity at the temperature it is applied during the making of the food products, or else the processing becomes far too difficult.
- the mechanical properties should be alright so that the layer can survive handling procedures, such as packaging without breaking.
- the layer should not be noticeable during eating, otherwise the eating quality is affected in a negative sense.
- the layer should not be apparent to the consumer.

So far most of the barrier layers present in commercial products are based on acetoglycerides. However these layers still have a considerable water permeability and are not always flexible enough and thus do not have the desired mechanical properties.

From US 5 130 151 it is known that compositions useful as moisture barrier for a food product can consist of edible oleaginous material with a melting point above ambient temperature and a portion of a material selected from sucro poly fatty esters and sugar alcohol polyol polyesters and a wax. The waxes mentioned do not include sunflower wax, while according to this document always a polyester must be present in the composition.

In our earlier patent application EP 910 955 (published April 1999) we disclose blends of wax esters and triglycerides as fat replacer. The wax esters consist of at least two different wax esters from which at least one has a melting point of 20 to 60 oC, while the mix of wax esters has a melting point of 15 to 45 oC. The triglycerides that can be present can be selected from the group of: liquid oils, fractions of hardened liquid oils, hardened liquid oils, cocoa butter, cocoa butter equivalents, palm oil, fractions thereof, fish oil, fish oil fractions, hardened fish oil or fractions thereof, enzymically made equivalents of above fats and mixtures of one or more of these fats. In example 2 of this document a wax is prepared from behenyl alcohol and the fatty acids of sunflower oil. However this product has a composition that is different from sunflower wax.

We performed a study to find out whether we could find new compositions that could be used as water barrier layers in food products without the problems indicated above. of

This study resulted in the finding of novel blends of edible organic materials, comprising a natural wax and glyceride materials, wherein the natural wax is a wax derived from sunflower oil and the glycerides substantially are triglycerides with a solid fat content at 20 oC (N20) as measured by unstabilised NMR techniques, of at least 20%, preferably at least 40%, most preferably 50-95% and wherein the wax is present in the blend in an amount of 1-80 wt%, preferably 2.5-60 wt%, most preferably 5-40 wt%.
The N-value mentioned here is measured by NMR techniques on a fat that has not been stabilised i.e. the fat has been subjected to the following pretreatment:
melting at 80 oC,
cool it to 0 oC and
hold at 0 oC for 60 minutes,
then heat to measurement temperature (here 20 oC) and
hold at 20 oC for 30 min before measuring the N-value.

Preferred blends are blends of
1. a wax of sunflower oil, obtained by cooling of sunflower oil to 0-20 oC, holding the cooled oil for 12-48 hours, removal of the wax by filtration and refiltration of the wax at 30-70 oC and
2. other glyceride components.
Most preferred blends are blends wherein the wax is obtained after a further purification process involving at least one of the following procedures:
1. melting, cooling to 50-70 oC and filtration or
2. dissolution in a solvent, such as acetone or hexane, cooling to 20-60 oC and filtration, recovering the wax as a solid.

The glyceride component present in these blends can be selected from a wide range of fats and oils. Preferably the glyceride component is selected from the group consisting of: liquid oils, partially or fully hardened liquid oils, fractions thereof, palm oil, or fractions thereof, shea oil or fractions thereof, cocoa butter or fractions thereof, sal or fractions thereof and mixtures of these oils.

The wax component in our blends often is obtained as a mixture with an oil from which it is isolated, as the triglycerides are often difficult to be removed completely. We prefer to use blends wherein the glyceride component at least partially is a liquid oil component as present in the sunflower wax as obtained by the process set out above.

In many instances it is preferred to add a filler material to the barrier layer, eg to decrease its caloric content or to improve the textural or other properties of the layer. Therefore we prefer to use blends of organic materials and a filler material wherein the blend comprises 90-10 wt% of a filler material and 10-90 wt% of the blend according to the invention. Typically the filler material is selected from the group consisting of
1. carbohydrates, in particular sugars,
2. thickeners, in particular cellulose powders or fibres, starches and modified starches,
3. emulsifiers, in particular mono-and diglycerides and lecithins,
4. powders, in particular dairy powders selected from butter milk powder, milk powder and skimmed milk powder and cocoa powder.

Part of the invention are also food products in particular multi-layered or compounded food products comprising at least one barrier layer, separating two layers with different water activity and wherein the barrier layer comprises a blend with the composition according to the invention.
These food products beneficially comprise at least three phases A, B and C,
A being a baked flour based system
B being the barrier layer according to the invention
C being a water based food composition
and wherein the layers A and C have a water activity Aw such that the difference {(Aw)_{A} - (Aw)_{C} }_{abs} hereof is at least 0.1, preferably at least 0.3.

Herein layer C preferably is selected from the group consisting of fat emulsions (water or fat continuous), creams, custards, jellies, ice cream, sauces, fruit, vegetables and jam.

In another type of food product the migration might take place via the air surrounding a mixture of small entities of the components of the food product. Examples hereof are blends of dried fruit and a cereal, such as corn flake or wheat flakes, which blend is provided with a barrier layer, wherein the barrier layer comprises a blend according to the invention.

A last embodiment of the invention is the use of a blend of edible organic materials as a barrier layer in food products wherein a barrier layer comprising the blend according to the invention is applied to prevent moisture migration in the food product and to improve the texture of the food products according to the invention.

### EXAMPLES

### Example 1

A number of pastry cups were filled with the following barriers:
- a hydrogenated vegetable fat (=fat A) having the following fatty acid composition:
   C16:0=27 %
   C18:0=13 %
   C18:1=60 %
- Sunflower oil = fat B
- Sunflower wax = fat C
- A blend of 90/5/5 Fat A/Fat B/Fat C = fat D

Fat A was obtained as a sample from Loders Croklaan
Fat B was a commercially available sunflower oil
Fat C was obtained as a sample from Unilever
Fat D was obtained by simply blending fats A, B and C in ratio's indicated.

The barriers were applied on the surface of the pastry cup by using a brush. With fat A and B this could be done easily at 45 oC. With fat D this was done at 90 oC. With fat C we could not get a good adherence to the surface, this material was also too brittle.
The cups were stored at 7 oC after being filled with custard for resp 24 and 48 hrs respectively. After this time the texture of the pastry cups was determined by breaking manually at least 5 of the cups. For the evaluation the results were listed on a scale of 1-5, 1 being very soggy, no resistance against breaking 5 being crispy, showing some snap, high resistance against breaking.
From the results it can be concluded that the blend demonstrated an unexpected and unpredictable (synergistic) improvement in texture compared with its components per se. The viscosity of the blend (fat D) was unexpectedly similar to the viscosity of main component A, although containing the higher viscosity fat C.

Results are summarized in the table:

| | TEXTURE | |
|---|---|---|
| | After 24 hrs | After 48 hrs |
| Fat A | 2.0 | 1.5 |
| Fat B | 1.0 | < 1.0 |
| Fat C | 2.0 | 1.5 |
| Fat D | 3.5 | 2.0 |

Also the viscosity of the fats were measured at 85 oC. The results being:

| | Viscosity |
|---|---|
| Fat A | 17.0 mPa.s |
| Fat B | 12.3 |
| Fat C | 24.7 |
| Fat D | 16.8 |

### Example 2

Crude sunflower stearine (wax) was obtained from Van den Bergh, Inveruno, Italy. It was analysed by high pressure liquid chromatography on silica and found to contain 5.8% wax esters. This was further concentrated by heating the oil to 35°C and pressing at 200 bar for 6 hours. The resultant concentrated wax from the solid cake was analysed to contain 53.4% wax. This was added to a partially hydrogenated vegetable oil at a level of 10% to give a blend containing approximately 5% wax (along with 5% residual sunflower oil) - Blend 1. The wax concentrate was similarly added to non-hydrogenated vegetable oil - Blend 2. The solid fat content at 20°C (N20) of non-hydrogenated palm olein, determined using pulse NMR following cooling of the fully melted fat to 0°C for 1 hour then holding at 20°C for 30 minutes, was 20.9%. The N20 of the partially hydrogenated vegetable oil was 61.1%. Carnauba wax and candellila wax (both from Sigma-Aldrich Company Ltd., Dorset, UK) were each added to partially hydrogenated vegetable oil at a level of 5% to give blends containing 5% wax (Blends 3 and 4 respectively). Candellila wax was also added to partially hydrogenated vegetable oil at a level of 10% (Blend 5). As controls, partially hydrogenated vegetable oil alone and with 5% sunflower oil were used (Blends 6 and 7 respectively). Each of these blends was painted onto 9 pieces of card (Cartoncote from Iggesund Paperboard, Workington, UK). The permeability of each of these coated cards was determined using the Versaperm WVTR Meter (Cheel Scientific, UK) at an RH gradient of 100%. Uncoated card gave a reading too high for the instrument to measure thus permeability values related to the lipid barrier applied. The data is summarised in the following table.

| **Sample** | **Permeability g.mil/(m**^{**2**}**.d.mmHg)** |
|---|---|
| Blend 1 | 0.92 |
| Blend 2 | 3.10 |
| Blend 3 | 2.86 |
| Blend 4 | 1.89 |
| Blend 5 | 1.27 |
| Blend 6 | 4.24 |
| Blend 7 | 5.04 |

Comparison of Blends 6 and 7 show that addition of just 5% sunflower oil increases the moisture permeability of partially hydrogenated vegetable oil. Comparison of Blend 1 with Blend 6 shows that addition of 5% sunflower wax (even in the presence of 5% sunflower oil) reduces the permeability more than do the other vegetable waxes (compare Blends 3 and 4 with Blend 6). Even increasing the level of candellila wax to 10% (Blend 5) does not reduce the permeability to that with 5% sunflower wax (Blend 6). Comparison of Blends 1 and 2 shows that a high N20 (i.e. > 40%) is necessary for low permeability.

### Example 3

Crude sunflower stearine was obtained from Van den Bergh, Inveruno, Italy. It was analysed by high pressure liquid chromatography on silica and found to contain 5.9% wax. This was hydrogenated using a catalyst to remove polyunsaturated fatty acids and to form the *trans* isomer, thus increasing the melting point of the oil (Blend 8). For comparison, sunflower oil was also hydrogenated by the same process (Blend 9). The N20 of Blend 8 was 63.3% and that of Blend 9 was 71.5% showing that the N20 of the triacylglycerol (fat) part of the Blend 8 was greater than 40%. The moisture permeabilities of these two fats were determined as in Example 2. The results are summarised below.

| **Sample** | **Permeability g.mil/(m**^{**2**}**.d.mmHg)** |
|---|---|
| Blend 8 | 1.09 |
| Blend 9 | 4.44 |

The data show that using sunflower stearine, with 6% wax, as the starting point for hydrogenation yields much lower moisture permeabilities.

### Example 4

Partially hydrogenated vegetable oil was blended with 10% concentrated wax (-50% wax) as prepared in Example 2 (Blend 10). Individual shortbread pastry dessert bases (Hoppers Farmhouse Bakery, Herne Bay, UK) were coated with Blend 10 by using a brush to 'paint' the interior of the pastry base with fully molten lipid. Eight bases were coated and eight bases were left uncoated. After the lipid had solidified, the bases were filled with confectioner's custard (Baktotaal BV, Nijmegen, The Netherlands) and stored in an enclosed box at 7°C. After 24 and 48 hours, four bases from each group were removed. The texture of the pastry was assessed by a panel manually breaking the bases after removal of the custard and assigning a score from 1 to 5, where 1 is soft and soggy and 5 is crisp and brittle. The results are summarised below.

| **Sample** | **Texture, 24 hours** | **Texture, 48 hours** |
|---|---|---|
| No barrier | 1.0 | 1.0 |
| Blend 10 | 4.0 | 2.0-3.0 |

Blend 10 reduced the loss of crispness in the pastry considerably. The texture was better after 48 hours than the control system with no barrier after 24 hours.

### Example 5

Petri dishes were filled with molten paraffin wax (Sigma-Aldrich Company Ltd., Dorset, UK) into which were embedded shortbread pastry cases (Safeway PLC, UK), leaving the upper surface exposed. This ensured that the principal route for moisture migration was through the exposed upper surface of the pastry. Hydrogenated sunflower stearine, as prepared in example 3. (Blend 8) was compared to partially hydrogenated vegetable oil (Blend 11) and to an uncoated pastry case. A brush was used to apply the molten barrier material to the pastry. After the lipid barrier had solidified, the bases were weighed, filled with confectioner's custard (Baktotaal BV, Nijmegen, The Netherlands) and stored in an cabinet at 6°C. After 24 and 8 hours, samples from each group were removed, the custard peeled out and the bases weighed. The increase in weight due to the uptake of moisture is summarised in the table below. Samples were prepared in duplicate.

| **Sample** | **Weight Increase (g) 24 hours** | **Weight Increase (g) 48 hours** |
|---|---|---|
| No barrier | 8.4 | |
| Blend 11 | 3.0 | 4.9 |
| Blend 8 | 1.0 | 2.0 |

Moisture uptake was considerably reduced when Blend 8 was used, being less after 48 hours than Blend 11 after 24 hours.

### Example 6

Experiments were performed by the same arrangement as example 5. Partially hydrogenated vegetable oil (Blend 11) was compared with the same oil combined with 10% concentrated wax (Blend 12) as prepared in Example 2. The increase in weight due to the uptake of moisture is summarised in the table below. Samples were prepared in duplicate.

| **Sample** | **Weight Increase (g) 24 hours** | **Weight Increase (g) 48 hours** |
|---|---|---|
| Blend 11 | 3.8 | 4.4 |
| Blend 12 | 1.2 | 2.5 |

Moisture uptake was considerably reduced when Blend 12 was used.

## Claims

1. Blend of edible organic materials, comprising a natural wax and glyceride materials, wherein the natural wax is a wax derived from sunflower oil and the glycerides substantially are triglycerides with a solid fat content at 20 oC (N20) as measured by unstabilised NMR techniques of at least 20%, preferably at least 40%, most preferably 50-95% and wherein the wax is present in the blend in an amount of 1-80 wt%, preferably 2.5-60 wt%, most preferably 5-40 wt%.

2. Blend according to claim 1, wherein the blend is a blend of 1.a wax of sunflower oil, obtained by cooling of sunflower oil to 0-20 oC, holding the cooled oil for 12-48 hours, removal of the wax by filtration and refiltration of the wax at 30-70 oC and 2. other glyceride components.

3. Blend according to claim 2, wherein the wax is obtained after a further purification process involving at least one of the following procedures: 1. melting, cooling to 50-70 oC and filtration or 2. dissolution in a solvent, such as acetone or hexane, cooling to 20-60 oC and filtration, recovering the wax as a solid.

4. Blend according to claim 1, wherein the glyceride component is selected from the group consisting of: liquid oils, partially or fully hardened liquid oils, fractions thereof, palm oil, or fractions thereof, shea oil or fractions thereof, cocoa butter or fractions thereof, sal or fractions thereof and mixtures of these oils.

5. Blend according to claim 1, wherein the glyceride component at least partially is a liquid oil component as present in the sunflower wax as obtained by the process set out in claims 2 or 3.

6. Blend of organic materials and a filler material wherein the blend comprises 90-10 wt% of a filler material and 10-90 wt% of the blend according to claims 1-5.

7. Blend according to claim 6, wherein the filler material is selected from the group consisting of 1. carbohydrates, in particular sugars, 2. thickeners, in particular cellulose powders or fibres, starches and modified starches, 3. emulsifiers, in particular mono-and diglycerides and lecithins, 4. powders, in particular dairy powders selected from butter milk powder, milk powder and skimmed milk powder and cocoa powder.

8. Multi-layered food product comprising at least one barrier layer, separating two layers with different water activity and wherein the barrier layer comprises a blend with the composition of claims 1-7.

9. Multi-layered food product according to claim 8, wherein the food product comprises at least three phases A, B and C,
A being a baked flour based system
B being the barrier layer defined in claim 8
C being a water based food composition
and wherein the layers A and C have a water activity Aw such that the difference {(Aw)_{A} - (Aw)_{C} }_{abs} hereof is at least 0.1, preferably at least 0.3.

10. Multi-layered food product according to claims 8-9, wherein the baked flour based system A is selected from the group consisting of biscuits, cakes, crackers, cookies, bread, wafers, pizza bases and pastries.

11. Multi-layered food products according to claims 8-10, wherein the water based food composition C is selected from the group consisting of fat emulsions (water or fat continuous), creams, custards, jellies, ice cream, sauces, fruit, vegetables and jam.

12. Food products comprising a blend of dried fruit and a cereal, such as corn flake or wheat flakes, which blend is provided with a barrier layer, wherein the barrier layer comprises a blend according to claims 1-7.

13. Use of a blend of edible organic materials as a barrier layer in food products wherein a barrier layer comprising the blend as defined in claims 1-7 is applied to prevent moisture migration in the food product and to improve the texture of the food products according to claims 8-12.

## Patentansprüche

1. Mischung von essbaren organischen Materialien, umfassend ein natürliches Wachs und Glyceridmaterialien, wobei das natürliche Wachs ein Wachs ist, das von Sonnenblumenöl stammt, und die Glyceride im wesentlichen Triglyceride mit einem Gehalt an festen Fetten bei 20°C (N20), gemessen durch unstabilisierte NMR-Techniken, von mindestens 20 %, vorzugsweise von mindestens 40 %, insbesondere von 50-95 % sind und wobei das Wachs in der Mischung in einer Menge von 1-80 Gew.%, vorzugsweise von 2,5-60 Gew.%, insbesondere von 5-40 Gew.% vorliegt.

2. Mischung nach Anspruch 1, wobei die Mischung eine Mischung aus 1. einem Wachs von Sonnenblumenöl, das durch Kühlen des Sonnenblumenöls auf 0-20°C, Halten des gekühlten Öls für 12-48 Stunden, Entfernen des Wachses durch Filtration und erneute Filtration des Wachses bei 30-70°C erhalten wird, und 2. anderen Glyceridkomponenten ist.

3. Mischung nach Anspruch 2, wobei das Wachs nach einem weiteren Reinigungsverfahren erhalten wird, das mindestens eines der folgenden Behandlungsverfahren beinhaltet:
1. Schmelzen, Kühlen auf 50-70°C und Filtration oder 2. Auflösung in einem Lösungsmittel, wie in Aceton oder Hexan, Kühlen auf 20-60°C und Filtration, wobei das Wachs als Feststoff erhalten wird.

4. Mischung nach Anspruch 1, wobei die Glyceridkomponente ausgewählt ist aus der Gruppe bestehend aus flüssigen Ölen, teilweise oder vollständig gehärteten flüssigen Ölen, Fraktionen davon, Palmöl oder Fraktionen davon, Shea-Öl oder Fraktionen davon, Kakaobutter oder Fraktionen davon, Sal oder Fraktionen davon und Gemischen dieser Öle.

5. Mischung nach Anspruch 1, wobei die Glyceridkomponente mindestens teilweise eine flüssige Ölkomponente ist, wie sie in Sonnenblumenwachs, das durch das Verfahren nach Anspruch 2 oder Anspruch 3 erhalten wird, vorliegt.

6. Mischung von organischen Materialien und einem Füllstoffmaterial, wobei die Mischung 90-10 Gew.% eines Füllstoffmaterials und 10-90 Gew.% der Mischung nach den Ansprüchen 1 bis 5 umfasst.

7. Mischung nach Anspruch 6, wobei das Füllstoffmaterial aus der Gruppe bestehend aus 1. Kohlenhydraten, insbesondere Zuckern, 2. Verdickungsmitteln, insbesondere Cellulosepulvern oder -fasern, Stärken und modifizierten Stärken, 3. Emulgatoren, insbesondere Mono- und Diglyceriden und Lecithinen, 4. Pulvern, insbesondere Milchpulvern, ausgewählt aus Buttermilchpulver, Milchpulver und Magermilchpulver, und Kakaopulver ausgewählt ist.

8. Mehrschichtiges Lebensmittelprodukt, das mindestens eine Sperrschicht umfasst, welche zwei Schichten mit unterschiedlicher Wasseraktivität trennt, und wobei die Sperrschicht eine Mischung der Zusammensetzung nach den Ansprüchen 1 bis 7 umfasst.

9. Mehrschichtiges Lebensmittelprodukt nach Anspruch 8, wobei das Lebensmittelprodukt mindestens drei Phasen A, B und C umfasst,
A ein gebackenes System auf Mehlbasis ist,
B die in Anspruch 8 definierte Sperrschicht ist,
C eine Lebensmittelzusammensetzung auf Wasserbasis ist,
und wobei die Schichten A und C eine solche Wasseraktivität Aw haben, dass die Differenz davon {(Aw)_{A} - (Aw)_{C} }_{abs} mindestens 0,1, vorzugsweise mindestens 0,3 ist.

10. Mehrschichtiges Lebensmittelprodukt nach Anspruch 8 oder Anspruch 9, wobei das gebackene System A auf Mehlbasis ausgewählt ist aus der Gruppe bestehend aus Keksen, Kuchen, Kräkkern, Plätzchen, Brot, Waffeln, Pizzagrundlagen und Konditoreiwaren.

11. Mehrschichtiges Lebensmittelprodukt nach den Ansprüchen 8 bis 10, wobei die Lebensmittelzusammensetzung auf Wasserbasis C ausgewählt ist aus der Gruppe bestehend aus Fettemulsionen (mit kontinuierlicher Wasser- oder Fett-Phase), Sahne (bzw. Cremes), Eiercreme (bzw. Milch/Eier-Pudding), Gelees, Speiseeis, Soßen, Früchten, Gemüse und Marmelade.

12. Lebensmittelprodukte, umfassend eine Mischung aus getrockneten Früchten und einem Getreide, wie Cornflakes oder Weizenflocken, wobei die Mischung mit einer Sperrschicht versehen ist und die Sperrschicht eine Mischung nach den Ansprüchen 1 bis 7 umfasst.

13. Verwendung einer Mischung von essbaren organischen Materialien als Sperrschicht in Lebensmittelprodukten, in denen eine Sperrschicht, die die Mischung nach den Ansprüchen 1 bis 7 umfasst, angewendet wird, um eine Feuchtigkeitsmigration in das Lebensmittelprodukt zu verhindern und die Textur der Lebensmittelprodukte nach den Ansprüchen 8 bis 12 zu verbessern.

## Revendications

1. Mélange de produits organiques comestibles, comprenant une cire naturelle et des glycérides, dans lequel la cire naturelle est une cire dérivée de l'huile de tournesol et les glycérides sont sensiblement des triglycérides ayant une teneur en graisse solide à 20°C (N20), mesurée par des techniques de RMN sans stabilisation d'au moins 20%, de préférence au moins 40, surtout 50 à 95% et dans lequel la cire est présente dans le mélange en une quantité de 1 à 80% en poids, de préférence 2,5 à 60% en poids, surtout 5 à 40% en poids.

2. Mélange selon la revendication 1, dans lequel le mélange est un mélange de 1. une cire d'huile de tournesol qu'on obtient en refroidissant une huile de tournesol à 0-20°C, en maintenant l'huile refroidie pendant 12 à 48 heures, en enlevant la cire par filtration et re-filtration de la cire à 30-70°C et 2. d'autres composants de glycérides.

3. Mélange selon la revendication 2, dans lequel on obtient la cire après un autre procédé de purification impliquant au moins l'une des procédures suivantes : 1. la fusion, le refroidissement à 50-70°C et la filtration ou 2. la dissolution dans un solvant, comme l'acétone ou l'hexane, le refroidissement à 20-60°C et la filtration, la récupération de la cire sous forme d'un solide.

4. Mélange selon la revendication 1, dans lequel le composant de glycérides est choisi parmi les huiles liquides, les huiles liquides partiellement ou entièrement durcies, leurs fractions, l'huile de palme ou ses fractions, l'huile de karité ou ses fractions, le beurre de cacao ou ses fractions, le sal ou ses fractions et des mélanges de ces huiles.

5. Mélange selon la revendication 1, dans lequel le composant de glycérides est au moins partiellement un composant d'huile liquide tel que présent dans la cire de tournesol obtenue par les procédés établis dans la revendication 2 ou 3.

6. Mélange de produits organiques et d'une charge, dans lequel le mélange comprend 90 à 10% en poids d'une charge et 10 à 90% en poids du mélange selon les revendications 1 à 5.

7. Mélange selon la revendication 6, dans lequel on choisit la charge parmi 1. les hydrates de carbone, en particulier les sucres, 2. les épaississants, en particulier les poudres ou les fibres de cellulose, les amidons et les amidons modifiés, 3. les émulsifiants, en particulier les mono et di glycérides et les lécithines, 4. les poudres, en particulier les poudres laitières choisies parmi la poudre de lait de beurre, la poudre de lait et la poudre de lait écrémé, et la poudre de cacao.

8. Produit alimentaire en couches multiples comprenant au moins une couche barrière qui sépare deux couches ayant une activité aqueuse différente et dans lequel la couche barrière comprend un mélange ayant la composition selon les revendications 1 à 7.

9. Produit alimentaire en couches multiples selon la revendication 8, dans lequel le produit alimentaire comprend au moins trois phases A, B et C,
A étant un système à base de farine cuite,
B étant la couche barrière définie dans la revendication 8,
C étant une composition alimentaire à base d'eau,
et dans lequel les couches A et C ont une activité aqueuse Aq telle que la différence {(Aq)_{A} - (Aq)_{C} }_{abs} est d'au moins 0,1 de préférence au moins 0,3.

10. Produit alimentaire en couches multiples selon les revendications 8 à 9, dans lequel le système à base de farine cuite A est choisi parmi les biscuits, les gâteaux, les craquelins, les petits gâteaux, le pain, les gaufrettes, les fonds de pizza et les pâtisseries.

11. Produits alimentaires en couches multiples selon les revendications 8 à 10, dans lequel la composition alimentaire à base d'eau C est choisie parmi les émulsions grasses (eau ou graisse continue), les crèmes, les crèmes anglaises, les gelées, les crèmes glacées, les sauces, les fruits, les légumes et les confitures.

12. Produits alimentaires comprenant un mélange de fruits secs et de céréales, comme les flocons de maïs ou les flocons de blé, ce mélange étant pourvu d'une couche barrière, la couche barrière comprenant un mélange selon les revendications 1 à 7.

13. Utilisation d'un mélange de produits organiques comestibles comme couche barrière dans des produits alimentaires où l'on utitise une couche barrière comprenant le mélange défini dans les revendications 1 à 7 pour empêcher la migration de l'humidité dans le produit alimentaire et pour améliorer la texture des produits alimentaires selon les revendications 8 à 12.
